# EUROPEAN PATENT SPECIFICATION

(11) **EP 2 279 850 B1**
(45) Date of publication and mention of the grant of the patent: **06.11.2013**
(21) Application number: 09425348.1
(22) Date of filing: 11.09.2009
(51) Int. Cl.: B29C 49/46, B65B 55/02, B67C 7/00

(54) **Method and plant for producing, filling and closing containers**
Verfahren und Anlage zum Herstellen, Befüllen und Verschließen von Behältern
Procédé et installation pour la production, le remplissage et la fermeture de récipients

(30) Priority: 31.07.2009 IT PR20090061
(43) Date of publication of application: 02.02.2011
(73) Proprietor: Gea Procomac S.p.A., 43038 Sala Baganza (PR) (IT)
(72) Inventor: Dordoni, Claudio, 43126 Parma (IT)
(74) Representative: Lissandrini, Marco

(56) References cited:
- WO-A1-2004/054882
- DE-A1-102005 012 507
- DE-A1-102006 053 193
- DE-A1-102007 017 938
- FR-A1- 2 766 169

## Description

The present invention relates to a method and a plant for producing containers from parisons of plastic material and for filling and closing said containers with aseptic technology.

Aseptic technology is **characterised in that** the operations are carried out in an environment in which the microbiological load is controlled so as to assure a longer shelf life, according to the type of product, and supply chain management procedures being equal. The invention finds application in the packaging of so-called "sensitive" food products, i.e. products that are particularly sensitive to bacteriological contamination and oxidation, such as isotonic beverages, fruit juices and nectars, soft drinks, tea, milk-based beverages, coffee-based beverages, etc., for which it becomes fundamental to avoid, during all stages of packaging, any contact with contaminating substances or contaminated containers. In the controlled atmosphere food packaging sector, in particular in the field of bottling, a distinction is made between "aseptic" technology and "ultra clean" technology.

In this regard, an "aseptic" container production, filling or closing process is defined as a process that takes place in a washable, sterilisable, contamination-controlled environment, whereas an "ultra clean" container production, filling or closing process is defined as a process wherein the containers are supplied already sterilised, or are sterilised at the filler entrance, with a lower reduction in the microbial count compared to aseptic technology, and only filling and closing are carried out in a controlled atmosphere. Unlike aseptic technology, in order to be able to guarantee products a longer shelf life after filling, the latter process (ESL, "Extended Shelf life") requires that the containers be stored at a low temperature ("cold chain").

In contrast, the products leaving a filling system that uses aseptic technology keep for a prolonged period of time and present physicochemical and sensory stability also at room temperature, i.e. in the absence of low temperatures after filling.

A first known technique envisages the production of containers using machines without aseptic technology and the subsequent transfer thereof to filling and capping machines constructed using aseptic technology. In cases where containers are supplied already sterilised, the same may be loaded into the filler without undergoing any supplementary treatment; otherwise they will undergo a sterilisation treatment carried out by machines suitably constructed according to aseptic technology and operatively connected to filling and capping machines endowed with aseptic technology. According to a second known technique, control of environmental contamination in aseptic bottling plants comprising both the container forming machine and the filling and capping machines is obtained by adopting so-called "clean rooms", i.e. contamination-controlled rooms inside which the processing machines are installed. In other words, a clean room is virtually like a "dome" designed to accommodate all of the machines used to produce, fill and cap containers.

Therefore, the packaging process involves generating and maintaining aseptic conditions in a volume of space that is decidedly larger than the zones where container forming, filling and closure take place. The clean room entirely encloses each machine, without any distinction between processing zones and auxiliary zones, such as those containing the drive members.

In light of what has been said above, the main disadvantage of traditional packaging methods and systems lies in the considerable bulkiness of such systems. In fact, clean rooms must necessarily have considerable dimensions in order to be able to enclose and isolate the machines and their respective drive members from the contaminated outside environment.

A further drawback regards plant operating costs. In fact, current packaging methods require that aseptic conditions be imposed and maintained in a volume of space that is oversized in relation to the operating zones where the container processing steps take place. Disadvantageously, therefore, this results in a considerable waste of operative fluids, e.g. sanitisation liquids and sterile air, and phenomena related to wear, e.g. of the filters necessary to purify the air which serves to generate an overpressure inside the clean room and thereby prevent the entry of contaminating agents from the outside environment.

A further disadvantage of clean rooms regards the difficulty of carrying out size change operations or maintenance and adjustments of machine parts, due to the risk of contamination that such operations entail. Access to a clean room by an operator is thus particularly critical and permitted only if the same is wearing a suitable mask, shoe covers, gown and cap, which must be sterile.

From document FR 2766169 is also known an aseptic bottling line wherein the working stations are closed and the conveyors are placed under tunnels.

In this context, the technical task at the basis of the present invention is to provide a method and a plant for producing, filling and closing containers which overcomes the limitations of the above-mentioned known art.

In particular, it is an object of the present invention to provide a method for producing, filling and closing containers wherein the various processing steps are carried out in uninterruptedly aseptic conditions.

It is a further object of the present invention to provide a method for producing, filling and closing containers which is repeatable and economical to implement.

It is another object of the present invention to propose a plant for producing, filling and closing containers which is able to operate in aseptic conditions.

It is a further object of the present invention to realise a plant for producing, filling and closing containers which is capable of simplifying maintenance operations, thus increasing productivity.

The defined technical task and the specified objects hereof are substantially achieved by a method and a plant for producing, filling and closing containers which comprise the technical characteristics described in one or more of the appended claims.

Further characteristics and advantages of the present invention will become more apparent from the following approximate, and hence non-restrictive, description of a preferred, but not exclusive, embodiment of a plant for producing and filling containers as illustrated in the appended drawings, in which:
- figure 1 is a plan view of a plant according to the invention, wherein the processing zones into which the plant is divided are highlighted;
- figure 2 is a plan view of the plant illustrated in figure 1, wherein the path of the parisons and formed containers is highlighted;
- figure 3 is a perspective view of an operative unit exemplifying the solutions adopted and which is extendable to all of the operative units of the plant illustrated in figure 1;
- figure 4 is a sectional view of the operative unit illustrated in figure 3;
- figure 5 is a perspective view of the operative unit illustrated in figure 3 including further construction details.

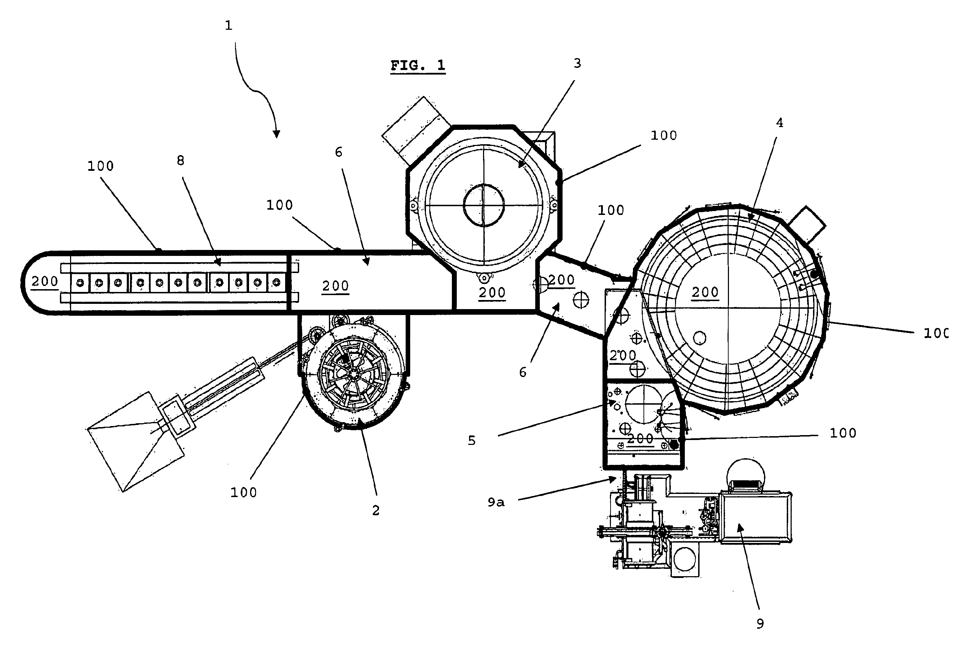

With reference to figure 1, a plant for producing and filling containers has been globally indicated with the number 1 and comprises:
- at least an operative unit 2 for sterilising parisons;
- at least an operative unit 3 for forming containers from sterilised parisons;
- at least an operative unit 4 for filling the formed containers;
- at least an operative unit 5 for closing the filled containers;
- a plurality of conveyors 6 linked together and interacting with corresponding operative units in order to convey the parisons or the containers from one of said operative units to another.

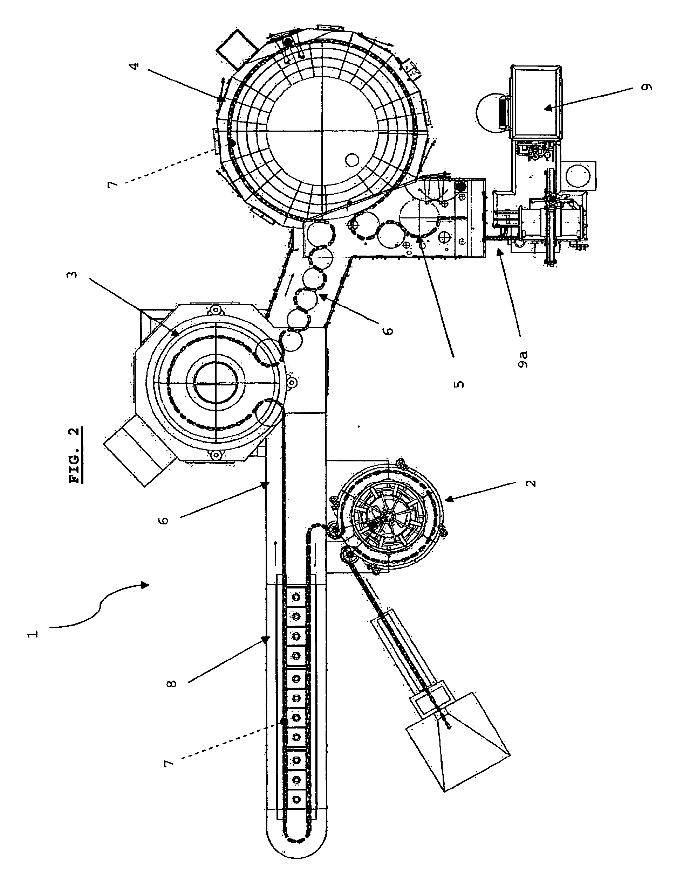

With reference to figure 2, it should be noted that the operative units and conveyors together define a preform and container processing line 7.

With reference to figure 1, the plant 1 is provided with a plurality of isolating devices 100 (highlighted with a thick line), one for each operative unit or conveyor. The main function of each isolating device is to define a narrow-sized environment, such as to enclose solely the processing zone of each operative unit or of each conveyor, where "processing zone" means the zone in which members for handling and/or processing the parisons or containers are active.

With reference to the operative units 2,3,4,5, the handling members carry out a processing of the parisons or containers, typically sterilisation of the parisons and forming, filling and closure of the containers.

With reference to the conveyors 6, the handling members transfer the parisons or containers between said operative units, thus assuring continuous processing along the entire processing line 7.

The plant 1 comprises means for generating and maintaining aseptic conditions inside each narrow-sized environment, so that the parisons or containers are processed on a processing line 7 that assures uninterruptedly aseptic conditions.

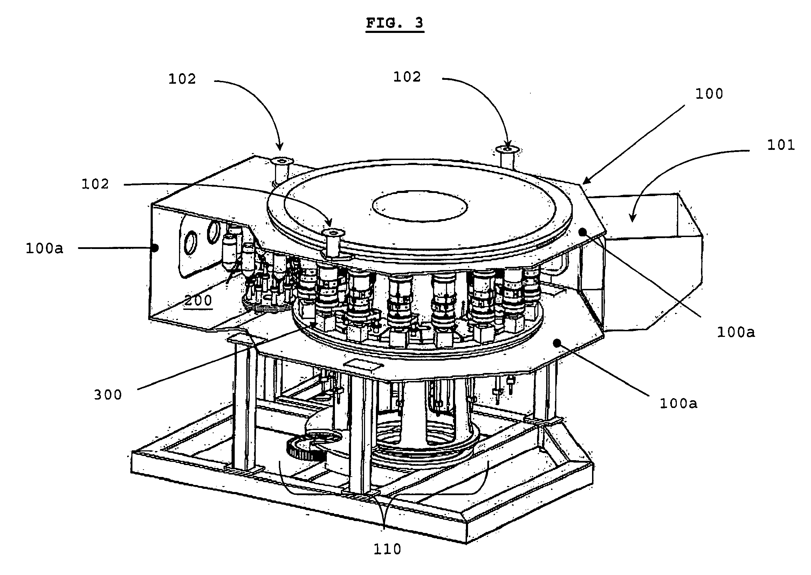

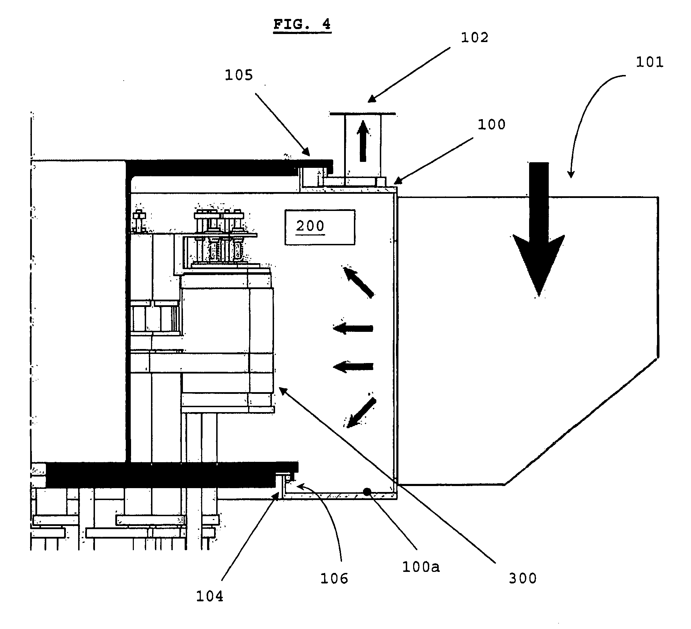

In other words, each isolating device 100 defines an aseptic environment 200 of minimal size which encloses the aforesaid processing zones, so that the operative units and conveyors, despite being individually separated from the contaminated outside environment, together define a single plant in which aseptic conditions are maintained uninterruptedly, from the operative unit 2 for sterilising the parisons to the operative unit 5 for closing the filled containers. Figures 3 and 4, though they refer to the container forming unit, are representative, in principle, of all the operative units and conveyors of the plant to which the present invention relates.

With reference to figures 3 and 4, each isolating device 100 comprises a box-like casing 100a shaped to accommodate a volumetric dimension of said processing zone in which preform and container handling and/or processing members 300 are active.

Said means for generating and maintaining aseptic conditions inside the isolating devices 100 comprise at least an inlet conduit 101 and at least an outlet conduit 102 for an aeriform fluid. In this manner, the aeriform fluid introduced through the inlet conduit 101 is made to flow through the narrow-sized environment 200. The inlet conduit is fitted with filters (e.g. high efficiency or HEPA filters) for filtering the aeriform fluid before it is introduced into the narrow-sized environment 200. Alternatively, or in addition, filters are fitted to a feed conduit (not illustrated) supplying the aeriform fluid.

Preferably, the inlet conduit 101 and outlet conduit 102 are dimensioned according to predefined mutual ratio so as to maintain the fluid at a predetermined pressure inside each isolating device. In the preferred and illustrated embodiment, the inlet conduit 101, fashioned in a lateral zone of the isolating device 100, has corresponding to it a plurality of outlet conduits 102 fashioned in an upper zone of the isolating device.

With particular reference to figure 4 (the arrows indicate the flow of the aeriform fluid), there are provided seal members 104, 105, positioned in the upper and lower zones of the isolating device 100. In particular, the seal members 104 positioned at the bottom of the isolating device are of the sliding contact type, whereas the seal members 105 in the upper position (in proximity to the outlet conduits 102) are dry labyrinth seals.

Alternatively, in the absence of relative motion between the isolating device and the structure of the operative unit or conveyor, there is envisaged the possibility of adopting simple sealing gaskets.

Preferably, each isolating device 100 comprises a section 106 for collecting the liquids used for cleaning or sterilising the narrow-sized environment 200. In particular, said collection section is fashioned in the lower zone of the isolating device. In an unillustrated variant embodiment it is envisaged that exhausters will be provided to exhaust the vapours generated by the chemical agents used to clean and sterilise the environment or, if sterilising agents in a gaseous or vapour state are used, to directly exhaust the substances used for sterilisation as well.

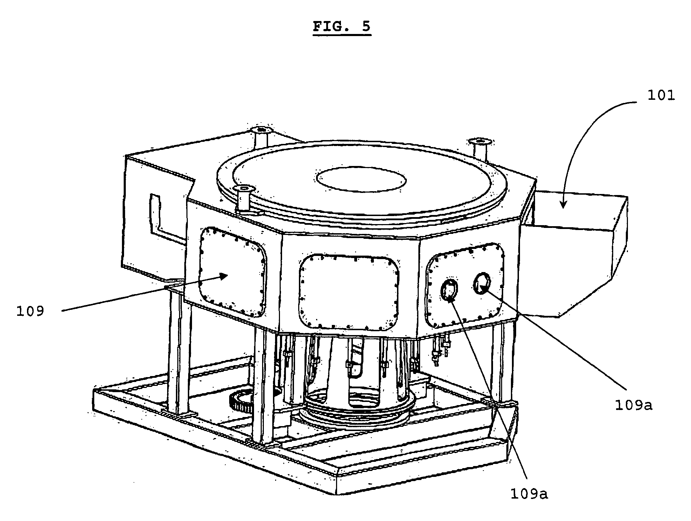

With particular reference to figure 5, in the lateral zone of the isolating device there is present at least one service section 109, which is provided with one or more points of access 109a, protected and sealed off from the outside, to allow adjustment, maintenance or size change operations to be performed inside the narrow-sized environment 200. Preferably, said protected points of access 109a have seal-tight sleeves complete with work gloves. Preferably, two adjacent service sections are provided, each having two protected points of access 109a.

According to an unillustrated variant embodiment, at least one section is provided inside the isolating device for storing the tools necessary for the adjustment, maintenance and size change operations. According to a further unillustrated variant embodiment, inside the isolating device there is also fashioned at least one section for storing equipment suitable for monitoring and microbiological sampling of the narrow-sized environment 200.

In the preferred and illustrated embodiment, each operative unit comprises members for handling the parisons or formed containers by means of rotating carousels provided with a plurality of workstations or by means of conveyor elements, similarly provided with a plurality of stations. The rotating carousels and conveyor elements are actuated by driving means comprising gears and/or kinematic mechanisms coupled with electric or electronic motors.

By way of example, and with reference to figure 3, said driving members are globally indicated with the number 110.

Preferably, the conveyors comprise preform or container handling members realised with conveyor belts and/or rotating starwheels having a plurality of workstations. The conveyor belts and/or rotating starwheels are actuated by driving means comprising gears and/or kinematic mechanisms coupled with electric or electronic motors.

With particular reference to figure 3, the driving means 110 of the handling members, whether they be rotating starwheels, as in the case of the operative units, or conveyor belts and/or rotating starwheels, as in the case of the conveyors, are positioned outside each narrow-sized environment 200. Advantageously, this technical solution prevents the risk of contamination caused by the impurities inevitably present in the lubricating oils or greases commonly used in mechanical gearing.

With particular reference to figures 1 and 2, the plant 1 preferably comprises an operative unit 8 for heating the parisons, e.g. an oven operating with an internal temperature ranging from 60°C to 150°C.

Said operative heating unit is positioned between said sterilising unit 2 and the forming unit 3 in order to raise the temperature of the parisons and set them up for the subsequent step of forming the containers.

The operative heating unit 8 is connected to a conveyor 6 to enable the transfer of the heated parisons to the forming unit 3. In the preferred and illustrated embodiment, the containers are formed by blowing, with or without stretching of the heated parisons.

In order to assure aseptic conditions throughout the entire processing line, the plant 1 comprises an additional isolating device suitable for defining a narrow-sized environment, such as to enclose solely the processing zone of the operative heating unit 8, and means for generating and maintaining aseptic conditions inside said narrow-sized environment.

With particular reference to figures 1 and 2, the plant 1 further comprises an operative unit 9 for sterilising caps. In the preferred embodiment, said operative cap sterilising unit 9 feeds the caps to the operative container closing unit 5 by means of a chute 9a. Furthermore, there is provided a rotating starwheel (not illustrated), positioned in proximity to the operative closing unit and serving to space the caps apart and put them into step with the containers.

The caps, after being accurately spaced, are delivered into the operative closing unit and, finally, coupled with the containers.

A method for producing and filling containers, according to the invention, comprises the following processing steps:
- sterilising parisons;
- forming containers from the parisons;
- filling the formed containers;
- closing the filled containers;

The aforesaid processing steps are linked by one or more steps of conveying the parisons or containers.

In particular, the method according to the invention envisages the following additional steps:
- arranging a plurality of narrow-sized environments in which to carry out said preform or container processing and conveying steps;
- generating and maintaining aseptic conditions inside each of said narrow-sized environments before implementing said processing and conveying steps, so that said preform or container processing and conveying steps take place in uninterruptedly aseptic conditions. Preferably, said step of generating and maintaining the aseptic conditions is performed on all of said narrow-sized environments simultaneously.

Advantageously, a method according to the invention requires no step of sterilising the containers after they have been formed. In fact, the presence of an aseptic environment in which the forming step takes place starting from sterile parisons assures the absence of any contamination, thus eliminating the necessity of carrying out a precautionary sterilisation of the formed containers.

The method according to the invention further comprises the following steps:
- sterilising caps simultaneously with any of said processing steps;
- arranging an additional narrow-sized environment in which said cap sterilising step is carried out;
- generating and maintaining aseptic conditions inside said additional narrow-sized environment before implementing said cap sterilising step;
- uninterruptedly connecting said additional narrow-sized environment to the narrow-sized environment in which said container closing step is carried out;
- transferring sterilised caps for the subsequent closing step.

Advantageously, the sterilisation of caps is carried out simultaneously with another processing step, preferably the filling step, which eliminates pauses in processing and renders the method extremely efficient.

Preferably, the container forming step comprises the following steps:
- heating the parisons;
- blowing the heated parisons, with or without stretching.

The functioning of a plant according to the invention is as follows.

First of all, the means for generating and maintaining aseptic conditions inside all of the isolating devices associated with the individual operative units and the individual conveyors are activated so as to define a single uninterruptedly aseptic processing line. Preferably, said means for generating and maintaining aseptic conditions operate simultaneously on all isolating devices.

Following the creation of a contamination-controlled atmosphere, the parisons are fed to the first operative unit, i.e. the sterilising unit 2.

Subsequently, the sterilised parisons are sent to the heating unit 8.

On leaving the heating unit, the parisons are transferred by at least one conveyor 6, which is also enclosed by an isolating device.

At the end of the forming process, the containers obtained are transferred to the filling unit 4 by means of at least one additional conveyor 7, which is also enclosed by an isolating device.

Simultaneously with the filling step, the caps are submitted to sterilisation and they are subsequently fed to the closing unit 5 together with the containers, which have been filled in the meantime.

At the end of the closing step, the containers exit the aseptic processing line in order to be sent off for any subsequent steps of labelling, secondary packaging and palletisation.

The invention achieves some important advantages. Firstly, a method according to the invention presents a high degree of repeatability in terms of constancy of results. From this point of view, the containers produced with such a method assure the physicochemical and sensory stability of the products at room temperature. In other words, a method according to the invention does not require any "cold chain or technology" in order to preserve the products. Advantageously, a plant according to the invention allows maintenance operations to be simplified, thus reducing plant downtimes and assuring high productivity. In fact, the presence of isolating devices applied solely to the processing zones facilitates size change and maintenance operations, since the latter do not require any physical access by an operator. From this point of view, a further advantage is a reduction in the risks of contamination.

Advantageously, a plant according to the invention is compact in size. Unlike traditional clean rooms, the isolating devices are applied solely to the processing zones and therefore do not entirely enclose the individual operative units or conveyors.

A further advantage regards the operating costs of the plant. In fact, in contrast with the methods according to the known art, the method according to the invention does not require aseptic conditions to be imposed and maintained in a volume of space that is oversized in relation to the operating zones where the container and preform processing steps actually take place. Advantageously, therefore, the plant eliminates the waste of operative fluids, e.g. sanitisation liquids and sterile air, and phenomena related to wear, e.g. of the filters necessary to purify the air which serves to generate an overpressure inside each isolating device and thereby prevent the entry of contaminating agents from the outside environment.

## Claims

1. Plant (1) for producing, filling and closing containers with aseptic technology, comprising:
- at least an operative unit (2) for sterilising parisons;
- at least an operative unit (3) for forming containers from the sterilised parisons;
- at least an operative unit (4) for filling the formed containers;
- at least an operative unit (5) for closing the filled containers;
- a plurality of conveyors (6) for handling the parisons or the containers,
said operative units (2,3,4,5) and conveyors (6) cooperating to define a processing line (7);
a plurality of isolating devices (100), one for each operative unit or conveyor, each suitable for defining a narrow-sized environment (200), parison or container handling and/or processing members (300) being active at the processing zone of each operative unit or conveyor; and
means (101,102) for generating and maintaining aseptic conditions inside each narrow-sized environment (200), so that the parisons or the containers are processed on a processing line (7) that assures uninterruptedly aseptic conditions,
**characterised in that** each of said isolating device (100) encloses solely the processing zone in which the members for handling and/or processing the parisons or containers are active and comprises a box-like casing (100a) shaped to accomodate a volumetric dimension of said processing zone, and **in that** said operative units (2,3,4,5) and conveyors (6) comprise driving means (110) comprising geard and/or kinetic mechanisms for the handling members (300), said driving means being positioned outside each narrow-sized environment (200).

2. Plant (1) according to any of claims 1, further comprising at least an operative unit (8) for heating the parisons, said operative heating unit being functionally positioned between said sterilising unit (2) and said forming unit (4) so as to raise the temperature of the parisons and arranging them for forming the containers.

3. Plant (1) according to claim 2 , comprising a further isolating device suitable for defining a narrow-sized environment, such as to enclose solely the processing zone of said operative heating unit; and
means for generating and maintaining aseptic conditions inside said narrow-sized environment, said operative heating unit being connected to one or more of said conveyors.

4. Method for producing, filling and closing containers with a plant (1) according to any of the preceding claims, comprising the following processing steps:
- sterilising parisons;
- forming containers from the sterilised parisons;
- filling the formed containers;
- closing the filled containers;
said steps being linked by one or more steps of conveying the parisons or the containers,
**characterised in that** it comprises the following steps:
- arranging a plurality of narrow-sized environments in which to carry out said parison or container processing and conveying steps;
- generating and maintaining aseptic conditions inside each of said narrow-sized environments before implementing said processing and conveying steps, so that said parison or container processing and conveying steps take place in uninterruptedly aseptic conditions, said step of generating and maintaining the aseptic conditions being performed simultaneously on all of said narrow-sized environments.

5. Method according to claim 4, wherein no step of sterilising the containers is implemented after the forming thereof.

6. Method according to claims 4 or 5, further comprising the following steps:
- sterilising caps simultaneously with any of said processing steps;
- arranging an additional narrow-sized environment in which said cap sterilising step is carried out;
- generating and maintaining aseptic conditions inside said additional narrow-sized environment before implementing said cap sterilising step;
- uninterruptedly connecting said additional narrow-sized environment to the narrow-sized environment in which said container closing step is carried out;
- transferring the sterilised caps for the subsequent closing step.

7. Method according to claims 4 to 6, wherein said container forming step comprises the following steps:
- heating the parisons;
- blowing the heated parisons, with or without stretching.

## Patentansprüche

1. Anlage (1) zum Herstellen, Befüllen und Verschließen von Behältern mit aseptischer Technik, umfassend:
- mindestens ein Betriebsaggregat (2) zum Sterilisieren von Vorformlingen;
- mindestens ein Betriebsaggregat (3) zum Formen von Behältern aus den sterilisierten Vorformlingen;
- mindestens ein Betriebsaggregat (4) zum Befüllen der geformten Behälter;
- mindestens ein Betriebsaggregat (5) zum Verschließen der gefüllten Behälter;
- eine Vielzahl an Fördereinrichtungen (6) zum Handhaben der Vorformlinge oder der Behälter,
wobei die Betriebsaggregate (2, 3, 4, 5) und die Fördereinrichtungen (6) kooperieren, um eine Bearbeitungslinie (7) zu bilden;
eine Vielzahl an Trennvorrichtungen (100), eine für jedes Betriebsaggregat oder jede Fördereinrichtung, die jeweils geeignet sind, um eine enge Umgebung (200) zu definieren, wobei die Elemente (300) zum Handhaben und/oder Bearbeiten der Vorformlinge oder Behälter im Bearbeitungsbereich jedes Betriebsaggregats oder jeder Fördereinrichtung aktiv sind; und
Mittel (101, 102) zum Erzeugen und Aufrechterhalten aseptischer Bedingungen in jeder engen Umgebung (200), sodass die Vorformlinge oder Behälter auf einer Bearbeitungslinie (7) bearbeitet werden, die ununterbrochen aseptische Bedingungen gewährleistet,
**dadurch gekennzeichnet, dass** jede der genannten Trennvorrichtungen (100) ausschließlich den Bearbeitungsbereich umschließt, in dem die Elemente zum Handhaben und/oder Bearbeiten der Vorformlinge oder Behälter aktiv sind, und ein kastenähnliches Gehäuse (100a) umfasst, das so ausgebildet ist, dass es eine volumetrische Dimension des Bearbeitungsbereichs unterbringt, und dadurch, dass die Betriebsaggregate (2, 3, 4, 5) und Fördereinrichtungen (6) Antriebsmittel (110), umfassend Getriebe und/oder kinetische Mechanismen für die Handhabungselemente (300), umfassen, wobei diese Antriebsmittel außerhalb jeder engen Umgebung (200) positioniert sind.

2. Anlage (1) nach Anspruch 1, ferner umfassend mindestens ein Betriebsaggregat (8) zum Erhitzen der Vorformlinge, wobei das Heizbetriebsaggregat funktionell zwischen dem Sterilisationsaggregat (2) und dem Formungsaggregat (4) positioniert ist, sodass die Temperatur der Vorformlinge erhöht wird und diese zum Formen der Behälter angeordnet werden.

3. Anlage (1) nach Anspruch 2, umfassend eine weitere Trennvorrichtung, geeignet, um eine enge Umgebung zu definieren, sodass ausschließlich der Bearbeitungsbereich des Heizbetriebsaggregats umschlossen ist; und Mittel zum Erzeugen und Aufrechterhalten aseptischer Bedingungen in dieser engen Umgebung, wobei das Heizbetriebsaggregat mit einer oder mehreren Fördereinrichtungen verbunden ist.

4. Verfahren zum Herstellen, Befüllen und Verschließen von Behältern mit einer Anlage (1) nach einem der vorhergehenden Ansprüche, umfassend die folgenden Bearbeitungsschritte:
- Sterilisieren der Vorformlinge;
- Formen von Behältern aus den sterilisierten Vorformlingen;
- Befüllen der geformten Behälter;
- Verschließen der gefüllten Behälter;
wobei diese Schritte durch einen oder mehrere Schritte zum Befördern der Vorformlinge oder der Behälter verknüpft sind,
**dadurch gekennzeichnet, dass** es die folgenden Schritte umfasst:
- Anordnen einer Vielzahl von engen Umgebungen, in denen die Schritte zum Bearbeiten und Befördern der Vorformlinge oder Behälter ausgeführt werden;
- Erzeugen und Aufrechterhalten aseptischer Bedingungen in jeder dieser engen Umgebungen, bevor die Schritte zum Bearbeiten und Befördern implementiert werden, sodass diese Schritte zum Bearbeiten und Befördern von Vorformlingen oder Behältern unter ununterbrochen aseptischen Bedingungen stattfinden, wobei der Schritt zum Erzeugen und Aufrechterhalten der aseptischen Bedingungen gleichzeitig auf allen engen Umgebungen ausgeführt wird.

5. Verfahren nach Anspruch 4, wobei nach dem Formen der Behälter kein Schritt zu deren Sterilisation ausgeführt wird.

6. Verfahren nach Anspruch 4 oder 5, ferner umfassend die folgenden Schritte:
- Sterilisieren von Stopfen gleichzeitig mit allen anderen Bearbeitungsschritten;
- Anordnen einer zusätzlichen engen Umgebung, in der der Schritt zum Sterilisieren der Stopfen durchgeführt wird;
- Erzeugen und Aufrechterhalten aseptischer Bedingungen in der zusätzlichen engen Umgebung, bevor der Schritt zum Sterilisieren der Stopfen implementiert wird;
- unterbrechungsloses Verbinden dieser zusätzlichen engen Umgebung mit der engen Umgebung, in der der Schritt zum Verschließen der Behälter ausgeführt wird;
- Übergabe der sterilisierten Stopfen an den darauffolgenden Schritt zum Verschließen.

7. Verfahren nach Anspruch 4 bis 6, wobei der Schritt zum Formen der Behälter die folgenden Schritte umfasst:
- Erhitzen der Vorformlinge;
- Blasen der erhitzten Vorformlinge mit oder ohne Strecken.

## Revendications

1. Installation (1) pour la production, le remplissage et la fermeture de récipients avec une technologie aseptique, comprenant:
- au moins une unité opérationnelle (2) permettant de stériliser des ébauches;
- au moins une unité opérationnelle (3) permettant de former des récipients à partir des ébauches stérilisées;
- au moins une unité opérationnelle (4) permettant de remplir les récipients formés;
- au moins une unité opérationnelle (5) permettant de fermer les récipients remplis;
- une pluralité de convoyeurs (6) destinés à la manipulation des ébauches ou des récipients,
lesdites unités opérationnelles (2, 3, 4, 5) et lesdits convoyeurs (6) coopérant pour définir une chaîne de transformation (7);
une pluralité de dispositifs isolants (100), un pour chaque unité opérationnelle ou convoyeur, chacun adapté pour définir un environnement de dimension restreinte (200), des organes de manipulation (300) et/ou de transformation de l'ébauche ou du récipient étant actives au niveau de la zone de transformation de chaque unité opérationnelle ou convoyeur; et
des moyens (101, 102) permettant de produire et de maintenir des conditions d'asepsie à l'intérieur de chaque environnement de dimension restreinte (200), de sorte que les ébauches ou les récipients soient transformés sur une chaîne de transformation (7) garantissant des conditions d'asepsie sans interruption,
**caractérisée en ce que** chacun desdits dispositifs isolants (100) contient uniquement la zone de transformation dans laquelle les organes de manipulation et/ou de transformation des ébauches ou des récipients sont actifs et comprend une enveloppe en forme de boîte (100a) adaptée pour loger une dimension volumétrique de ladite zone de transformation, et **en ce que** lesdites unités opérationnelles (2, 3, 4, 5) et lesdits convoyeurs (6) comprennent des moyens d'entraînement (110) comprenant des engrenages et/ou des mécanismes cinétiques pour les organes de manipulation (300), lesdits moyens d'entraînement étant positionnés à l'extérieur de chaque environnement de dimension restreinte (200).

2. Installation (1) selon la revendication 1, comprenant de plus au moins une unité opérationnelle (8) pour chauffer les ébauches, ladite unité de chauffage opérationnelle étant fonctionnellement positionnée entre ladite unité de stérilisation (2) et ladite unité de formage (4) de sorte à augmenter la température des ébauches et à les prédisposer pour former les récipients.

3. Installation (1) selon la revendication 2, comprenant un autre dispositif isolant adapté pour définir un environnement de dimension restreinte, de sorte à contenir uniquement la zone de transformation de ladite unité de chauffage opérationnelle; et
des moyens permettant de produire et de maintenir des conditions d'asepsie à l'intérieur dudit environnement de dimension restreinte, ladite unité de chauffage opérationnelle étant reliée à un ou plusieurs desdits convoyeurs.

4. Procédé pour la production, le remplissage et la fermeture de récipients avec une installation (1) selon l'une quelconque des revendications précédentes, comprenant les étapes de traitement suivantes:
- stérilisation des ébauches;
- formage des récipients à partir des ébauches stérilisées;
- remplissage des récipients formés;
- fermeture des récipients remplis;
lesdites étapes étant liées à une ou plusieurs étapes d'acheminement des ébauches ou des récipients,
**caractérisé en ce qu'**il comprend les étapes suivantes:
- prédisposer une pluralité d'environnements de dimension restreinte dans lesquels effectuer lesdites étapes de traitement et d'acheminement de l'ébauche ou du récipient;
- produire et maintenir des conditions d'asepsie à l'intérieur de chacun desdits environnements de dimension restreinte avant la mise en place desdites étapes de traitement et d'acheminement de sorte que les étapes de traitement et d'acheminement de ladite ébauche ou dudit récipient se déroulent en permanence dans des conditions d'asepsie, ladite étape de production et de maintien des conditions d'asepsie étant réalisée simultanément sur l'ensemble desdits environnements de dimension restreinte.

5. Procédé selon la revendication 4, dans lequel aucune étape de stérilisation des récipients n'est mise en place après le formage.

6. Méthode selon les revendications 4 ou 5, comprenant de plus les étapes suivantes:
- stérilisation des capsules simultanément à l'une quelconque desdites étapes de traitement;
- prédisposition d'un environnement de dimension restreinte supplémentaire dans lequel s'effectue ladite étape de stérilisation des capsules;
- production et maintien des conditions d'asepsie à l'intérieur dudit environnement de dimension restreinte supplémentaire avant la mise en place de ladite étape de stérilisation des capsules;
- raccordement sans interruption dudit environnement de dimension restreinte supplémentaire à l'environnement de dimension restreinte dans lequel s'effectue ladite étape de fermeture du récipient;
- transfert des capsules stérilisées pour l'étape de fermeture ultérieure.

7. Procédé selon les revendications 4 à 6, dans lequel l'étape de formage du récipient comprend les étapes suivantes:
- chauffage des ébauches;
- soufflage des ébauches chauffées avec ou sans étirage.
